# EUROPEAN PATENT SPECIFICATION

(11) **EP 1 426 089 B1**
(45) Date of publication and mention of the grant of the patent: **07.05.2008**
(21) Application number: 02080034.8
(22) Date of filing: 02.12.2002
(51) Int. Cl.: B01D 29/76, B01D 37/03

(54) **Method for filtering biological mud and apparatus for performing the same**
Methode und Apparat zur Filtration von biologischem Schlamm
Méthode et appareil pour la filtration de boue biologique

(43) Date of publication of application: 09.06.2004
(73) Proprietor: Van Kaathoven, H., 5424 SJ Elsendorp (NL)
(72) Inventor: Van Kaathoven, H., 5424 SJ Elsendorp (NL)

(56) References cited:
- DE-A- 3 240 326
- FR-A- 2 780 963
- US-A- 4 081 381
- US-A- 4 124 499
- US-A- 4 714 557

## Description

The present invention comprises a method for filtering biological mud comprising solid particles suspended in a fluid medium, comprising bringing the mud in co-operative connection with a filter by filling a column shaped filter bag with the mud, inflating membranes that surround the filter bag, which inflating provides the generation of a pressure difference over the filter causing a flow of the fluid medium through the filter and a formation of a residue comprising the solid particles on the side of the filter facing the mud, and the breaking of the residue while the mud is in co-operative connection with the said filter.

Such a method is known from EP 0 714 318. The known method is applied by providing a tubular container in which a filter bag is housed for reception of the mud. This way, the mud is brought in co-operative connection with the filter, i.e. be provided such that it can be subjected to a filtering action of the said filter. The filter bag has an inlet mouth at one end for feeding the mud into the filtering bag. The known apparatus comprises a pressure generating pump for applying pressure to the mud via the said inlet mouth.
This way the fluid medium is forced through the filtering bag. At the outer surface of the filtering bag a drainage screen is provided which makes it possible to guide the outflow of the fluid medium. The wall of the container itself is provided with a plurality of holes so that the fluid medium can leave the filtering apparatus. When the fluid medium passes through the filter, at the same time, the solid particles aggregate into a semi-solid residue on the side of the filter facing the mud. Such a semi-solid residue blocks the openings of the filter and reduces the outflow of the fluid medium tremendously, in particular when the solid particles are very small, e.g. in the order of micrometers to tens of micrometers.
In order to solve this problem, one or more deformable membranes, comparable to fire-hoses, are housed in the container, which membranes define a closed volume of variable size. The membranes are positioned between the rigid container and the filtering bag. These membranes are connected to fluid pumping means communicating with the said volumes, to vary the size of the volumes (typically, but not necessarily, independently controllable), thereby squeezing the filtering bag into the container. The expansion of the membranes not only causes an extra pressure on the mud, but also causes continuous breaks in the residue, thereby creating new escape routes for the filtrate. The dynamic movement of the membranes therefore enhances the flow of the fluid medium through the filtering bag, in order to increase the overall yield of the filtering action.

However when using biological muds, i.e. muds of biological or essentially biological origin (e.g. from biotechnology) like liquid manure or biological silt it appears that with the known method, after the first fluid medium has been pressed through the filter, there is hardly any filtering action left, despite the breaking action of the membranes. The remaining flow after the first few litres is limited to a few drops per second. The result is that only a very small percentage, typically 5 to 10%, of the fluid medium is actually separated from the mud in an acceptable amount of time. The remaining fluid medium can be separated by removing the mud from the filtering apparatus and put in into an apparatus with a clean filter. Then, a next amount of 5-10% of the fluid medium can be removed. After each such step the original filter bag and apparatus have to be cleaned in order to be well prepared for a second use. This way, the separation of the fluid medium from the mud is extremely time consuming and thus very expensive. Therefore, in particular for liquid manure, other solutions are used in practise such as sedimentation followed by biological degradation or simply transporting the manure to areas were there is a shortage of this product. The first solution however takes a lot of time and the second one is expensive especially when one realises that transporting liquid manure is in fact transporting water (95%) with a little bit (5%) of solid fertiliser suspended in it.

It is therefore an object of the invention to provide for a method which is particularly suited for filtering biological mud, by the application of which method a large amount of the fluid medium can be separated from the mud in an economical way. It is another object of the invention to provide for an apparatus that is suitable to apply this method.
For this, a method according to the preamble has been devised, characterized in that the method further comprises flocculating the mud before the pressure difference is generated, and applying as the said filter a filter having a surface that is abhesive for biological mud, the abhesive surface facing the mud.
In this respect, flocculating means treating the mud such that flakes of aggregated solid particles in the mud are provided. This could e.g. be done by adding a flocculant to the mud as is generally known in the prior art. A flocculant is a substance or mixture of substances, which is capable of providing such flakes of aggregated solid particles. An abhesive surface means that the surface is capable of preventing or reducing adhesion to it's surface, i.e. upon an impact to the residue that is comparable with the impact of the membranes in the known apparatus, the residue that adheres to the filter substantially comes off. Surprisingly, the combination of these two features provides for a solution to the problem of the known method. It appears that the application of a flocculant for the filtering of biological mud, which is for example known from EP 1 190 755, in itself does not provide an adequate solution of the problem. The filtering action is only slightly improved by adding a flocculant to the biological mud. Next to this, the application of an abhesive filtering cloth, such as cloths made from materials that are known for reducing adhesion such as polymers containing a high fluorine content, in itself does not provide for an adequate solution to the problem. By applying an abhesive filtering cloth little or no improvement of the filtering action is observed. Applicant has surprisingly found that by combining these features, especially for biological mud and in particular for liquid manure originating from pigs, a very good filtering action can be obtained.
According to the invention, the biological mud is flocculated in order to provide for flakes of aggregated particles in the mud. These flakes should preferably be stable, i.e. last for the duration of the filtering action and more preferably, can withstand some mechanical impact resulting for example from a flow of the mud. In an embodiment, the flocculated mud is transported to the filtering room, e.g. a filtering bag as known from EP 0 714 318. It should be clear that for enjoying the benefits of the invention, the flocculating process could also be performed in situ, i.e. in the filtering room itself. As soon as the room is filled, a pressure difference is generated, whereupon the fluid medium is forced through the filter and the solid particles form a residue on the filter surface. It should be clear that it is also possible to reduce the pressure on the outside of the room, whereupon the fluid medium is sucked through the filter which has in essence the same effect. The source of pressure generation is not essential. In an embodiment a separate pump is used to pressurize the content of the room with air and at the same time membranes as known from EP 0 714 318 are filled with air or fluid to provide for an additional pressurizing means and deform the filtering surface to break the residue. As soon as the filtering action stops, i.e. when no fluid medium passes through the filter anymore, the room can be depressurized and again filled with mud. Then the whole process could take place a second time, third time etc. for example until no more mud can be filled into the room. At this point, it appears that substantially the whole room could be filled with a semi-solid residue, typically containing only 10 to 15% of the original fluid content of the mud that has been filtered. Upon applying a light mechanical action on the filter, this residue comes off and can be taken out of the room and used for other purposed, e.g. as a fuel substance.

It is noticed that although the application of a flocculant for the filtering of biological mud is known from EP 1 190 755, the method disclosed therein does not represent the closest prior art because it does not mention a process step wherein the residue is broken while the mud is in co-operative connection with the filter.

In an embodiment, a flocculant is added to the mud before the said mud is brought in co-operative connection with the filter. This embodiment is advantageous because adding a flocculant is an easy way to create the desired flakes and also, the flocculating process often requires special equipment and mixing processes. Such a process can be more adequately performed outside the filtering room, e.g. in a mixer that is adapted to flocculate biological mud. Also, the use of a separate flocculating step before the mud is brought in co-operative connection with the filter makes it possible to repeatedly fill the filtering room with flocculated mud in an easy and cheap process. Otherwise, the flocculating process should take place in the filtering room that is often, at least partly, filled with residue.

In another embodiment the flocculating is such that stable flakes having a particle size of 10-100µm are formed in the mud. It was found that flakes of this size, which size could for example be established by a microscopic technique or by a sedimentation technique as is well known in the art, are particularly suitable for filtering biological mud. That is, high flow rates of fluid medium and high separation percentages (amount of fluid medium separated from the mud) can this way be provided for.

In yet another embodiment, before flocculating the mud, a coagulant is added to the said mud, the coagulant preferably being a chloride salt of iron. A coagulant is a substance or mixture of substances that is capable of coagulating in particular colloidal particles, i.e. particles that have a maximum diameter of approximately 1 µm. Because of their small size, these particles tend to run through the filter, together with the fluid medium, and contaminate the filtrate. Although usually not present to a large extent, at least in mass percentage, these particles can provide for a significant contamination of the filtrate which should thus be subjected to an after treatment in order to remove these particles before the filtrate can be drained off as sewage. In order to avoid such an after treatment, the coagulant is added which makes these small particles aggregate to bigger ones which are capable of being built in the flakes. This way, a very clean filtrate can be provided for, which could be drained off without any extra processing.

Preferably, but not necessarily, a chloride salt of iron, such as Fe(III)Cl, is used as a coagulant. This coagulant is namely non-toxic and can be drained off to the surface water without any harm for the environment.

In another embodiment the filter has a calendered surface. By calendering the surface of the filter, sharp edges, bulges, irregularities etc. of this surface are substantially removed. The surface of the filter becomes more or less flat so that there are hardly any sites for the residue to mechanically adhere. Thus, by calendering the surface, this surface can be made abhesive. Apparently, this provides for a very good filtering cloth of which the residue comes off easily by providing a relative low mechanical impact.

In a further embodiment of the foregoing, the filter comprises a first filtering fabric that is calendered and a second fabric for supporting the said first fabric. The filter has to satisfy several demands that are more or less contradictory. First of all, the filter has to have sufficiently small meshes such that hardly any solid matter passes through the filter. This can be provided for by making a filtering cloth out of extreme thin fibres in the order of tens of micrometers. However, the filter also has to withstand pressure and possibly relatively large deformations. For this, a cloth made out of thick wires would be ideal. Also, the open area of the surface has to be sufficient, thus making a filter with thick wires and an extreme small mesh size is not an option for practice: there would be hardly any openings left. By providing a first filtering fabric and a second supporting fabric, the filtering property could be provided for by the first fabric (made out of thin fibres and having a small mesh size) and the mechanical strength could be provided for by the second fabric (made out of thick wires and having a large mesh size in order to be strong but not block the filter).

In yet a further embodiment, liquid manure is filtered and the first fabric has meshes with a size ranging from 5-100 µm, preferably 5-20µm. It appears that liquid manure is extremely hard to filter. It has been found that for this type of biological mud a mesh size of 5-100 µm, preferably 5-20µm, is ideal. This is not straightforward since liquid manure contains particles ranging from below 1 µm to several centimetres or even decimetres. Until now, it has not been possible to adequately filter liquid manure with any mesh size, but in combination with the features of the present invention it has been found that a good filtering action can be provided for, together with a very high solids content of the residue and a low contamination of the filtrate, when a mesh size is chosen according to this embodiment. An even further improvement is seen in the narrow range.

The invention can be used in an apparatus for filtering biological mud comprising solid particles suspended in a fluid medium, comprising a room for receiving the mud, the room being at least partially limited by a filter, means for generating a pressure difference over the filter in order to cause a flow of the fluid medium through the filter and a formation of a residue comprising the solid particles on the side of the filter facing the mud, means for breaking the residue while the mud is still in the room limited by the said filter, wherein the apparatus comprises a chamber for flocculating the mud and the said filter has an abhesive surface. As will be understood from the above described considerations, this apparatus has surprisingly been found to be able and effectively filter biological mud.

In an embodiment, the chamber of this apparatus is connected to the said room via a mud transport system comprising a plunger pump, preferably a gas plunger pump. In this embodiment the chamber wherein the flocculant is added and mixed into the mud is connected to the filter room via a transport system, for example a system comprising transport tubes. For transportation of the mud from the chamber to the room a pump is installed in the system. It has been found that many pumps, because of the mechanical forces they exert on the mud (such as is for example the case in a centrifugal pump) break the flakes, whereupon the advantages of the present invention are possibly annulled. To overcome this problem, it has been found that a plunger pump is capable of pressurizing the mud for transportation without exerting too much mechanical forces on the mud. In an advantageous embodiment, the plunger consists out of a cylinder of gas in order to reduce the mechanical impact to a minimum.

In another embodiment the room is extended in a substantial vertical direction when filtering, and is provided with tilting means such that the room can be brought in a substantial horizontal direction. A substantial vertical direction when filtering is advantageous in an embodiment where the filter room comprises a tubular filter bag as is known from EP 0 714 318. However, since the filter bag in a practical embodiment is relatively long, for example up to several meters, and the mud is filled from an inlet mouth in the vicinity of the top of the filter room, the mud initially falls down in the filter bag from a relatively large height. Because of the large mechanical impact corresponding to this filling action, it is possible that the flakes in the flocculated mud break and the benefits of the present invention cannot be used to their full scope. This problem has been solved by providing the apparatus with a tilting means such that the room can be brought in a substantial horizontal direction. Just before filling, the room is brought in a substantial horizontal direction. Then the mud is pumped in, for example from one of the ends of the filter room. When full, the room is tilted back into its vertical direction and the filtering action can start. This way, a substantial disturbance of the flake structure can be avoided.

In yet another embodiment the apparatus is provided with weighing means for weighing the mass of the room and/or chamber. In the known apparatus it has to be estimated upon filling of the filter room, when this room is completely filled. By providing for a weighing means to independently weigh the filter room and/or chamber, the filling of the room can be monitored by establishing the change of mass of one of these units, or in an embodiment, of both units. For example, in the latter embodiment, when during a filling action the mass of the filter room does no longer increase and the mass of the mixing chamber does no longer decrease, this means that the filter room is full and the pumping action for transporting the mud can stop. This automation simplifies the overall process of filtering and increases the productivity to a large extent.

The filter is mainly described as a filtering cloth. However, this is not essential for application of the present invention. Any filter means suitable to let the fluid medium through and block passage of the solid particles to a substantial amount, and also, having abhesive properties so that the residue can be broken away from the filter means in order to make a sufficient flow of filtrate possible, could advantageously be used in the present invention.
It is also noted that adding a coagulant also covers the application of a process that is capable of coagulating the small particles without using a tangible coagulant.

The above described and other features of the present invention are discussed in greater detail below in the following detailed description of a certain embodiment, with reference to the accompanying drawings. This embodiment of the invention is illustrated in the drawings and will be described in greater detail merely by way of example.

Figure 1 is a schematic representation of an apparatus for using the invention.
Figure 2 is a schematic representation of a cross section of a tubular filter bag and a surrounding drainage and supporting element.
Figure 3 is a side view of the filterbag as shown in figure 2.
Figure 4 is a schematic representation of an abhesive filter cloth.
Figure 5 is a schematic representation of the effect of a breaking mechanism in an apparatus as known from the prior art.
Figure 6 is a schematic representation of the effect of the same breaking mechanism in an apparatus for using the invention.

Example 1 is an embodiment of the method according to the invention.

### Figure 1

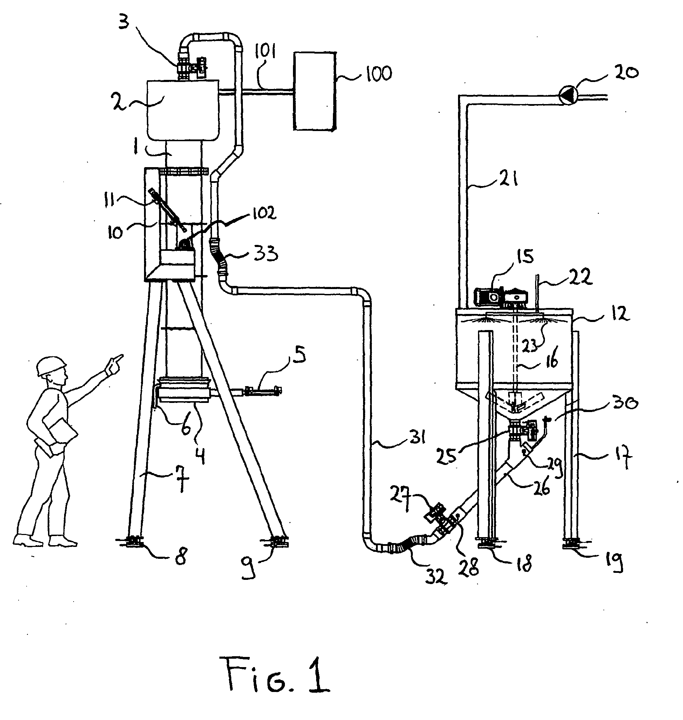

Figure 1 is a schematic representation of an apparatus for using the present invention. The apparatus comprises a steal filter house 1 that is tubular and has a height of approximately 3 meters and a diameter of approximately 30 cm. The filter house is hollow in order to be able and hold a filter bag (not shown). At the top, the filter house is provided with a protection cover 2. In this cover, the membranes for breaking the residue (membranes not shown) are connected to pressure hoses. The pressure is generated in compressor 100 which is connected to the pressure hoses in protection cover 2 via pressure guidance 101. By applying these pressure means the breaking membranes can be individually inflated as is known from the prior art. The house can be closed at the top by a valve 3. At the bottom the house 1 has a first outlet mouth 4, which can be selectively opened by valve 5, and a second outlet mouth 6. Outlet mouth 4 is operatively connected to the inside (residue side) of the filter bag for releasing the semi-solid residue once the filtering process has ended. Outlet mouth 6 is operatively connected to the outside (filtrate side) of the filter bag in order to release the filtrate during filtering action. The filter house is carried by frame means 7 which are connected to weighing means 8 and 9. By applying these weighing means the weight of the complete filtering column can be established at all times. The filter house 1 is connected to the frame means 7 by a tilting means 10 comprising a damper 11 and an axis of rotation 102. These tilting means can tilt the filter house from the shown vertical position into a substantial horizontal position.

Also provided is a mixing chamber 12 for premixing the biological mud with flocculant and optionally coagulant. The chamber is preferably made from polypropylene or polyethylene, but other materials could also be used. The capacity of the chamber is approximately 1 cubic meter. The mixing chamber is provided with a motor 15 to spin mixing rotor 16. The chamber is carried by frame means 17 which are connected to weighing means 18 and 19. With these means, the weight of the chamber can be established at all times. Also provided is a pump 20 by which the biological mud can be pumped into the chamber via transport pipe 21. Via a second pipe 22 additives such as a flocculant can be added to the mud, which additives are spread by sprinklers 23. These sprinklers can also be used for cleaning the interior of the mixing chamber. The mixing chamber can be selectively opened by valve 25. This valve opens into a tube 26 that in its turn can be closed by valve 27. This tube 26 is provided with a first sensor 28 and a second sensor 29 that are able to sense the presence of biological mud. The tube 26 is also provided with air valve 30.
The mixing chamber 12 is connected to filter house 1 via a transport tube 31. This tube 31 comprises flexible joints 32 and 33. These joints are present for preventing too much tension in the transport tube and also to make the tilting of the filter house 1 possible without the need for decoupling the mixing chamber from the filter house. The diameter of the tubes is approximately 50 mm. They are made of polypropylene in this specific example. Polyethylene has also proven to be a suitable material for this purpose. These materials are preferably above e.g. stainless steel or PVC because these materials tend to develop residue on their surface.

### Figure 2

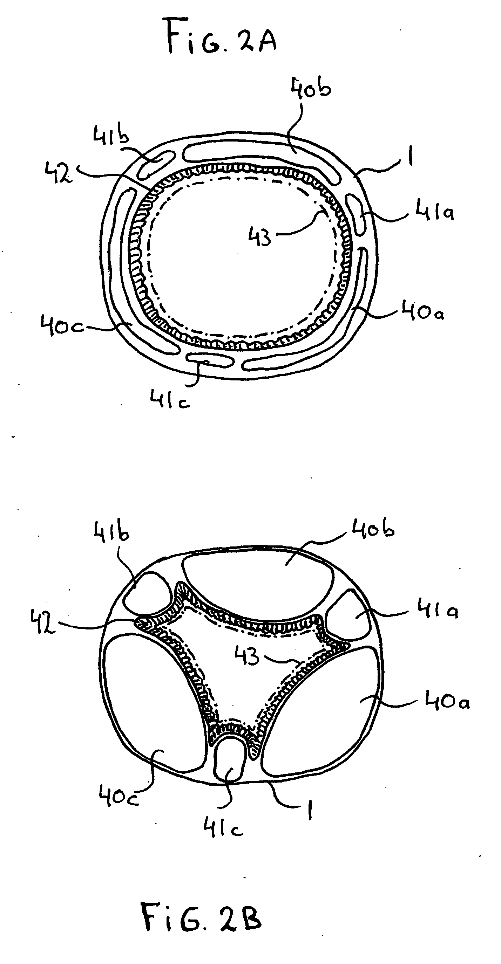

Figure 2 is a schematic representation of a cross section of a tubular filter bag and a surrounding drainage and supporting element. Figure 2a shows the filter house 1. Also present are 3 main membranes 40a, 40b and 40c that are breaking membranes as known from the prior art. Next to these main membranes, sub-membranes 41a, 41 b and 41 c are provided. Next, a drainage and supporting element 42 is shown. This element is constituted as a relatively thick, approximately 1 cm, endless rubber belt that is consolidated by an internal cloth (not shown). This belt is for supporting the filter bag 43 but also for guiding filtrate that has been forced through this filter 43, to the bottom of the filter house. For this, the surface of the element 42 facing the filter bag is provided with channels which are schematically shown as irregularities in this surface.

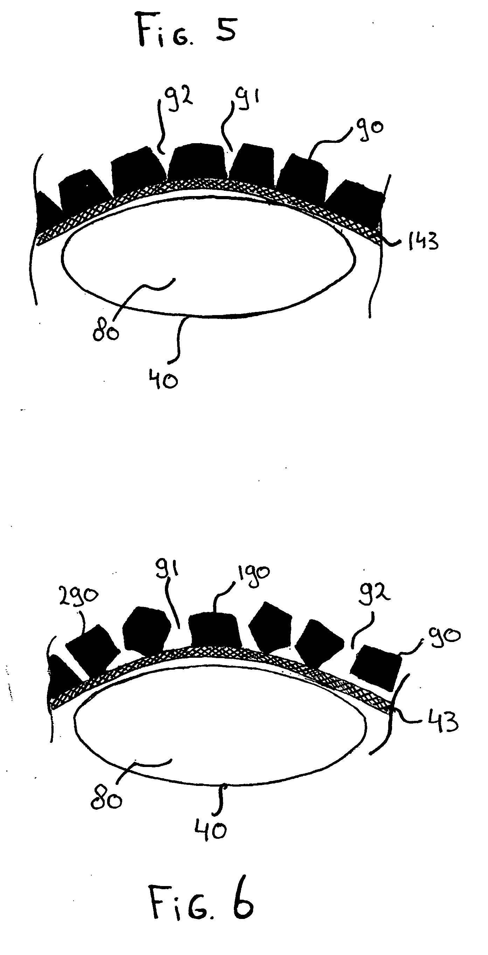

Figure 2b shows the same cross section. However, the breaking membranes are inflated in this figure. By inflating the membranes the pressure t the inside of the filter bag is heightened and also, the filterbag is deformed. By this deformation new drainage channels are provided in the residue as will be further explained with reference to figure 5.

### Figure 3

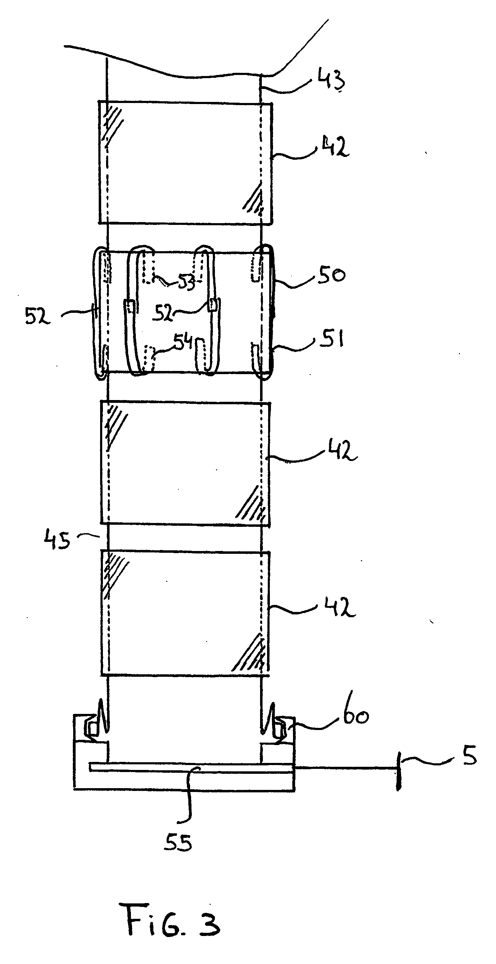

Figure 3 is a side view of the filterbag as shown in figure 2. Shown is the lower part of the filter bag 43, which is surrounded by 4 supporting elements 42. The supporting elements each have a height of approximately 40 cm. The space 45 in between these supporting elements is approximately 5 mm. This space is needed to fasten these elements to the filter bag. For this, the filter bag is provided with ribbons 50 and 51. For each supporting element, 9 upper ribbons 50 are connected to the filterbag at locations 53, and 9 lower ribbons 51 are connected to the filter bag at locations 54. When assembling the filter means, the supporting elements are pushed over the filter bag until the corresponding location is reached. Then, the upper and lower ribbons are pulled through the said space and connected to each other at locations 52, in this example via mechanical sticking tape. This way, the supporting elements are removably connected to the filter bag. For simplicity, only the highest but one supporting element of figure 3 is shown to be connected.
At the bottom of the filter bag a closing means 60 is provided in order to securely separate the inner space of the filter bag from the outer space of this bag. The inner space can be opened to its environment by removing plate 55 which is part of valve 5. This way, a residue that is formed in the inside of the filter bag can be removed from this bag.

### Figure 4

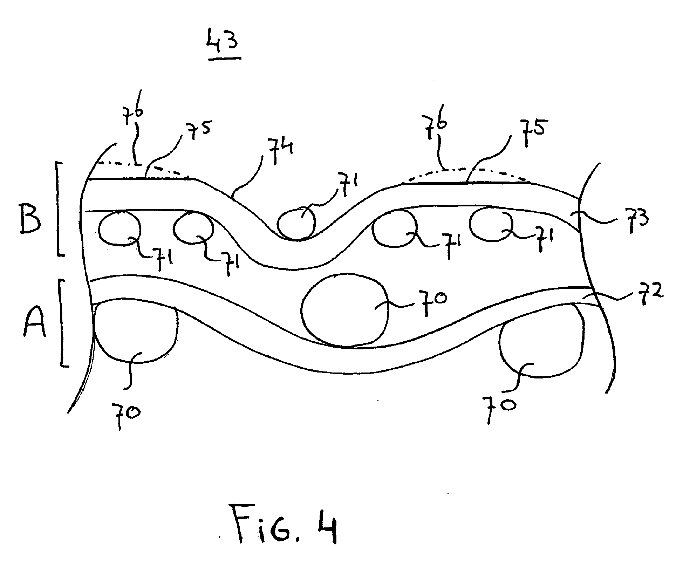

Figure 4 is a schematic representation of an abhesive filter cloth 43, made of polypropylene. Shown is a cross section of a so-called double layer filter cloth, comprising a supporting layer A and a filtering layer B. The supporting layer A is a woven fabric comprising first fibres 72 and second fibres 70. These fibres are woven into a strong supporting cloth, having meshes of approximately 200 to 300µm.
The filtering layer B comprises first fibres 73 and second fibres 71. In this example the first fibres are mono-filament fibres and the second fibres are multi-filament fibres. These fibres are woven into a cloth having meshes of approximately 12 µm. This way valleys 74 arise as well as hills 76.
Both layers are brought together and the upper surface is then calendered by applying both pressure and heat. This action also provides for a mechanical connection between the two layers. By calendering the filter, the hills 76 are flattened to provide the straight areas 75. It appears that this way an abhesive surface is created preventing or at least reducing the adherence of solid matter to the filter. Such a filter is available from the company Eurogaas B.V, Lochem, The Netherlands.
Although calendering is preferred for the manufacturing of an abhesive filter for filtering biological mud because of its simplicity and effectiveness, it may be clear for the skilled man that calendering is a mere preferred example of providing for an abhesive surface.
In principle other ways, such as chemical after treatment, or choosing the right material for the filter, or using other mechanical (after) treatments, could also be used for providing for an abhesive surface.

### Figure 5

Figure 5 is a schematic representation of the effect of a breaking mechanism in an apparatus as known from the prior art. Shown is a breaking membrane 40 that is inflated by pumping a fluid in the interior 80 of the membrane. The expansion of the membrane causes a deformation of the filter 143. On its turn, this deformation causes continuous breaks 91 and 90 in the layer of semi-solid residue 90. This breaking causes creating of new and continuous escape routes for the fluid medium. It is however seen that the residue remains on the filter surface and thus is still able to severely reduce the passage of fluid medium through the filter.

### Figure 6

Figure 6 is a schematic representation of the effect of the same breaking mechanism in an apparatus for using the invention. This figure is a schematic representation of an effect that may be created when using an abhesive filter. The deformation of the filter cloth 43 is the same as in the known apparatus (figure 5) but because the abhesive properties of the upper surface of the filter, the semi-solid residue not only breaks so that new drainage channels 92 and 91 appear but also, the residue breaks away from the filter to a smaller or greater extent (depending i.a. on the type of filter, the type of residue, the type of breaking mechanism and the action this mechanism has taken). It can be seen that same residue parts line part 90 completely comes off, thus rendering a relatively large area of the filter free of any blocking substance. Other parts coming off at least partly, like part 290. This also creates a relatively large area of clean filter. Some parts do not come off. The overall effect however is that the residue comes off pretty easily from the filter. The advantage during filtering is that, when being used together with a flocculated biological mud, that a large steady flow of filtrate is created. Next to this, when the filtering action is completed, the remaining residue can be easily removed from the filter

### Example 1

This example describes the filtering of liquid pig manure, comprising next to urine and faeces of pigs, sand, stones, grains of corn, hairs, etc. Because of its very complicated composition, liquid pigsmanure is very hard to filter. In the first step, 300 litres of liquid manure, containing approximately 95% water, is pumped into mixing chamber 12 via tube 21. Optionally, before pumping the manure water may even be added to the manure in order to facilitate pumping. In this example the chamber has a capacity of approximately 1 cubic meter.
Then 0,12 litres of the anti-foaming agent Struktol SB 2088 (available from Breustedt Chemie, Apeldoorn, The Netherlands) is added via sprinklers 23 while rotating rotor 16 at 36 revelations per minute. The advantage of this anti-foaming agent is that foaming is prevented to a large extent in the next process steps. If not, it would take longer to perform the additional steps and also, a mixing chamber with a greater volume would be needed. After approximately 5 seconds 2,8 litres of a 40% Fe(III)Cl solution (available from Breustedt Chemie under the name "40% Ferrichloride") is added while maintaining the mixing action at 36 r.p.m.. When the foam has disappeared, 7 litres of a flocculant solution is added, still mixing at 36 r.p.m. The flocculant solution is a solution of 35 grams SYNTHOFLOQ 5010HL available from Breustedt Chemie in water or filtrate. Before use, this solution has to mature for at least 30 minutes. As soon as the manure is flocculated completely, which is easy to see with the naked eye (when reaching the flocculated stage, the manure transforms from an opaque mixture to a clear fluid medium with flakes dispersed in it), the mixing action is stopped to prevent mechanical deterioration of the flakes. Flocculating this way typically takes about 10 to 20 seconds. It is noted that other substances can be used for coagulating (e.g. aluminium salts like aluminium sulphate) and flocculating (e.g. acrylamide copolymers and commercially available cationic derivatives of acrylic acid like Stockhausen 852 BC, and SNF Floerger FO 4250).

After this, the manure is pumped into filter house 1, which has been tilted into a horizontal position. Valve 25 beneath chamber 12 is opened and the manure gently flows into tube 26. As soon as sensor 29 establishes that the tube 26 is filled with manure, valve 25 is closed. Then valve 27 is opened and the mud flows into transport tube 31. In order to completely empty the tube 26, a gas plunger is used that is created by applying a 3 bar air pressure via air valve 30. As soon as sensor 28 establishes that tube 26 is empty, valve 27 is closed and the pressure in the tube is relieved via air valve 30. Then valve 25 is opened again and the process repeats until filter house 1 is completely filled. This can be established because at that stage, the weight of the complete filter house, measured by means of weighing means 8 and 9 does no longer increase and the weight of the mixing chamber, measured by means of weighing means 18 and 19 does no longer decrease upon a plunger action within tube 26. In the shown apparatus, this takes about 8 fill and empty actions of tube 26 (volume of tube is about 30 litres, volume of filter house is about 250 litres). Then Valve 3 is closed. Then, the filtering action is started by pressurizing the three main membranes 40. The pressure is increased until it reaches approximately 5 to 6 bars. As soon as the filtrate stops coming out of outlet mouth 6, the sub-membranes 41 are pressurized to the same pressure as used for the main membranes.
When no filtrate comes out of outlet mouth 6 any more, the membranes are depressurized. Then valve 3 is opened and the filter house is filled again with liquid manure as described above. Upon filling the house using an air plunger in tube 26, the filter and membranes are pushed back into their original position against the wall of the filter house. Now, fewer fill-and-empty actions of tube 26 are needed to fill the filter house because semi-solid residue has formed in the filter room. Then the filtering of the manure takes place again as described before.
The whole process is repeated until no liquid manure can be filled in the filter house any more. At that stage, the filter bag in the filter house is almost completely filled with the semi-solid residue. This residue is taken out by opening valve 5 and pulsating membranes 40 and 41. The residue, which contains about 25 to 35% of solid matter, then comes out as a solid pillar. The residue can be used as a fuel.
This way, the original 300 litres of manure that contained about 95% of water, is separated into 258 litres fluid filtrate, which contains about 1,3 to 2% of dissolved matter and is coloured like apple juice, and 42 kg solid residue, which contains about 30% solid matter.

## Claims

1. Method for filtering biological mud comprising solid particles suspended in a fluid medium, comprising:
- bringing the mud in co-operative connection with a filter (43) by filling a column shaped filter bag (43) with the mud,
- inflating membranes (40, 41) that surround the filter bag (43), which inflating provides:
- the generation of a pressure difference over the filter (43) causing a flow of the fluid medium through the filter (43) and a formation of a residue (90, 190, 290) comprising the solid particles on the side of the filter (43) facing the mud, and
- the breaking of the residue (90, 190, 290) while the mud is in co-operative connection with the said filter (43),
**characterized in** further comprising
- flocculating the mud before the pressure difference is generated, and
- applying as the said filter (43) a filter (43) having an abhesive surface (75), the abhesive surface (75) facing the mud.

2. A method according to claim 1, **characterized in that** a flocculant is added to the mud before the said mud is brought in co-operative connection with the filter (43).

3. A method according to any of the preceding claims, **characterized in that** the flocculating is such that stable flakes having a particle size of 10-100µm are formed in the mud.

4. A method according to any of the preceding claims, **characterized in that** before flocculating the mud, a coagulant is added to the said mud, the coagulant preferably being a chloride salt of iron.

5. A method according to any of the preceding claims, **characterized in that** the filter (43) has a calendered surface(75).

6. A method according to claim 5, **characterized in that** the filter (43) comprises a first filtering fabric (73) that is calendered and a second fabric (72) for supporting the said first fabric (73).

7. A method according to claim 6, **characterized in that** liquid manure is filtered and the first fabric (73) has meshes with a size ranging from 5-100 µm, preferably 5-20µm.

## Patentansprüche

1. Verfahren zum Filtern von biologischem Schlamm, umfassend feste Teilchen, die in einem fluiden Medium suspendiert sind, umfassend:
- in zusammenwirkende Verbindung bringen des Schlamms mit einem Filter (43), indem ein säulenförmiger Filtersack (43) mit dem Schlamm gefüllt wird,
- Aufblasen von Membranen (40, 41), die den Filtersack (43) umgeben, wobei das Aufblasen bereitstellt:
- die Erzeugung einer Druckdifferenz gegenüber dem Filter (43), die einen Strom des fluiden Mediums durch den Filter (43) und eine Bildung eines Rückstands (90, 190, 290) verursacht, umfassend die festen Teilchen auf der Seite des Filters (43), die dem Schlamm zugewandt ist, und
- das Brechen des Rückstands (90, 190, 290) während der Schlamm in zusammenwirkender Verbindung mit dem Filter (43) ist,
**dadurch gekennzeichnet, dass** es ferner umfasst
- Ausflocken des Schlamms bevor die Druckdifferenz erzeugt wird, und
- Verwenden als Filter (43), eines Filters (43), der eine adhäsionsfeindliche Oberfläche (75) aufweist, wobei die adhäsionsfeindliche Oberfläche (75) dem Schlamm zugewandt ist.

2. Verfahren nach Anspruch 1, **dadurch gekennzeichnet, dass** dem Schlamm ein Ausflockungsmittel zugefügt wird, bevor der Schlamm in zusammenwirkende Verbindung mit dem Filter (43) gebracht wird.

3. Verfahren nach einem der vorhergehenden Ansprüche, **dadurch gekennzeichnet, dass** das Ausflockungsmittel derart ist, dass stabile Flocken, die eine Teilchengröße von 10 bis 100 µm aufweisen, in dem Schlamm gebildet werden.

4. Verfahren nach einem der vorhergehenden Ansprüche, **dadurch gekennzeichnet, dass** dem Schlamm, bevor der Schlamm ausgeflockt wird, ein Koagulationsmittel zugefügt wird, wobei das Koagulationsmittel bevorzugt ein Eisenchloridsalz ist.

5. Verfahren nach einem der vorhergehenden Ansprüche, **dadurch gekennzeichnet, dass** der Filter (43) eine kalandrierte Oberfläche (75) aufweist.

6. Verfahren nach Anspruch 5, **dadurch gekennzeichnet, dass** der Filter (43) ein erstes Filtergewebe (73), das kalandriert ist, und ein zweites Filtergewebe (72) zum Tragen des ersten Gewebes (73) umfasst.

7. Verfahren nach Anspruch 6, **dadurch gekennzeichnet, dass** Flüssigmist gefiltert wird, und dass das erste Gewebe (73) Maschen mit einer Größe aufweist, die von 5 bis 100 µm, bevorzugt 5 bis 20 µm reicht.

## Revendications

1. Procédé de filtration de boue biologique comprenant des particules solides en suspension dans un milieu fluide, qui comprend :
- la mise en connexion de coopération de la boue avec un filtre (43) en remplissant de boue un sac filtrant en forme de colonne (43),
- le gonflement des membranes (40, 41) qui entourent le sac filtrant (43), lequel gonflement fournit :
- la génération d'une différence de pression sur le filtre (43) entraînant un écoulement du milieu fluide à travers le filtre (43) et une formation d'un résidu (90, 190, 290) comprenant les particules solides sur le côté du filtre (43) faisant face à la boue, et
- la rupture du résidu (90, 190, 290) alors que la boue se trouve en connexion de coopération avec ledit filtre (43),
**caractérisé en ce qu'**il comprend en outre :
- la floculation de la boue avant la génération de la différence de pression, et
- l'application en tant que ledit filtre (43) d'un filtre (43) ayant une surface antiadhésive (75), la surface antiadhésive (75) faisant face à la boue.

2. Procédé selon la revendication 1, **caractérisé en ce qu'**un floculant est ajouté à la boue avant que ladite boue ne soit mise en connexion de coopération avec le filtre (43).

3. Procédé selon l'une quelconque des revendications précédentes, **caractérisé en ce que** la floculation est telle que des flocons stables ayant une taille de particules de 10 à 100 µm sont formés dans la boue.

4. Procédé selon l'une quelconque des revendications précédentes, **caractérisé en ce qu'**avant la floculation de la boue, un coagulant est ajouté à ladite boue, le coagulant étant de préférence un sel de chlorure de fer.

5. Procédé selon l'une quelconque des revendications précédentes, **caractérisé en ce que** le filtre (43) a une surface calandrée (75).

6. Procédé selon la revendication 5, **caractérisé en ce que** le filtre (43) comprend un premier tissu filtrant (73) qui est calandré et un second tissu (72) destiné à supporter ledit premier tissu (73).

7. Procédé selon la revendication 6, **caractérisé en ce que** du lisier est filtré et **en ce que** le premier tissu (73) a des mailles d'une taille se trouvant dans la plage de 5 à 100 µm, de préférence de 5 à 20 µm.
